# EUROPÄISCHE PATENTSCHRIFT

(11) **EP 1 855 366 B1**
(45) Veröffentlichungstag und Bekanntmachung des Hinweises auf die Patenterteilung: **19.05.2010**
(21) Anmeldenummer: 07009431.3
(22) Anmeldetag: 10.05.2007
(51) Int. Cl.: H02H 9/08

(54) **Anordnung und Verfahren zur Kompensation eines Fehlerstromes bei einem Erdschluss**
Circuit and method to compensate the fault current during a ground fault
Circuit et procédé pour la compensation du courant de défaut pendant un défaut de terre

(30) Priorität: 11.05.2006 DE 102006021888
(43) Veröffentlichungstag der Anmeldung: 14.11.2007
(73) Patentinhaber: H. Kleinknecht GmbH & co.KG, 98693 Ilmanau (DE); E.ON edis AG, 15517 Fürstenwalde/Spree (DE); KEMA IEV, 01217 Dresden (DE)
(72) Erfinder: Schäfer, Helge, 06295 Lutherstadt Eisleben (DE); Gorgas, Paul-Dieter, 14480 Potsdam (DE); Stade, Dietrich, 98693 Ilmenau-Oberpörlitz (DE); Dorendorf, Stefan, 14552 Michendorf (DE); Ventzke, Uwe, 15517 Fürstenwalde/Spree (DE); Pietzsch, Hermann, 01069 Dresden (DE); Prinz, Steffen, 01217 Dresden (DE); Ulrich, Peter, 98527 Suhl (DE)
(74) Vertreter: Liedtke, Klaus

(56) Entgegenhaltungen:
- AT-B- 113 589
- CN-A- 101 009 429
- DE-A1- 19 525 417
- DE-C- 630 751
- JP-A- 2006 109 567
- WINTER K M: "Swedish distribution networks-a new method for earthfault protection in cable- and overhead systems" DEVELOPMENTS IN POWER SYSTEM PROTECTION, 1993., FIFTH INTERNATIONAL CONFERENCE ON YORK, UK, LONDON, UK,IEE, UK, 1993, Seiten 268-270, XP006514559 ISBN: 0-85296-559-1

## Beschreibung

Die Erfindung betrifft eine Anordnung und ein Verfahren zur Kompensation eines einpoligen Fehlerstromes bei einem Erdschluss in einem Drehstromnetz beliebiger Frequenz.

Öffentliche und industrielle Drehstromnetze, insbesondere dreiphasige Mittelspannungsnetze im Bereich von 1 kV bis 30 kV und Hochspannungsnetze mit Nennspannungen kleiner/gleich 110 kV, die der regionalen Versorgung dienen, werden überwiegend mit Resonanzsternpunkterdung betrieben. Das bedeutet, dass der mittelspannungsseitige Sternpunkt eines Einspeisetransformators oder der Sternpunkt eines Stempunktbildners über eine veränderliche Erdschlussdrossel mit einem Erdpunkt verbunden ist. Hat ein so ausgebildetes Mittelspannungsnetz einen Erdschluss in einem der drei Leiter, soll dieser Fehlerzustand im Hinblick auf die Versorgungszuverlässigkeit nicht zur sofortigen Abschaltung der fehlerhaften Leitung führen. Der bei einem Erdschluss fließende kapazitive Fehlerstrom ist durch die Erdkapazitäten des Mittelspannungsnetzes bedingt. Kapazitäten treten auch zwischen den Leitern untereinander auf, deren Beitrag zum Fehlerstrom im Falle eines einpoligen Erdschlusses ist jedoch vernachlässigbar. Im Falle eines Erdschlusses in einem Leiter wird die Erdkapazität dieses Leiters kurzgeschlossen, während sich die Spannungen an den Erdkapazitäten der beiden anderen, nicht vom Erdschluss betroffenen Leiter um den Faktor √3 erhöht und der kapazitive Fehlerstrom in den beiden anderen Leitern zum Fließen kommt. Die Erdschlussdrossel ist so abgestimmt, dass sie diesen kapazitiven Fehlerstrom durch einen induktiven Strom an der Erdfehlerstelle kompensiert. Das gilt jedoch nur bei Netzfrequenz, einer Grundfrequenz von meist 50 Hz, auf die die Erdschlussdrossel abgestimmt ist. Der vermehrte Einsatz von stromrichtergespeisten Anlagen und Geräten mit Schaltnetzteilen in Haushalten und Industrie führt zu Netzrückwirkungen, die sich u. a. als harmonische Verzerrung der Netzspannung äußern. Insbesondere treten dabei Frequenzkomponenten der fünften und der siebten Harmonischen der Grundfrequenz (250 Hz und 350 Hz) auf. Diese harmonischen Frequenzkomponenten der Netzspannung tragen zu einem erheblichen Teil zu den bei Erdschlüssen fließenden Fehlerströmen bei, umso mehr da in den letzten Jahren Mittelspannungsnetze zunehmend als Kabelnetze ausgebaut wurden und der Anteil an Freileitungen zurückgeht und da die Erdkapazität eines Kabels bei gleicher Länge etwa zwanzig- bis vierzigfach so groß ist, wie die einer Freileitung. Der Anteil dieser von der Grundfrequenz verschiedenen Frequenzkomponenten am Fehlerstrom kann mit der Erdschlussdrossel nicht kompensiert werden, da deren Resonanz so abgestimmt ist, dass sie nur die 50 Hz Komponente kompensiert. Dieser Sachverhalt hat eine Vergrößerung des verbleibenden Fehlerstromes an der Stelle des Erdschlusses zur Folge und es können in der Umgebung des Erdfehlers Gefährdungsspannungen (Berührungs- und Schrittspannungen) entstehen, die für Menschen oder Tiere lebens- oder gesundheitsgefährdend sind. In der DE 195 25 417 C2 ist ein Lösungsweg zur Kompensation ohmscher Anteile des Fehlerstromes im Erdfehlerfall mittels eines gesteuerten, passiven Reaktanzelements angegeben. Die von der Grundfrequenz abweichenden Frequenzkomponenten werden jedoch nicht berücksichtigt. Aus AT 11 35 89, US 1 983 085 und GB 279 841 sind Anordnungen bekannt, bei denen Erdfehlerströme durch passive Filter kompensiert werden, die in Reihe oder parallel zur Erdschlussdrossel geschaltet sind. Dabei werden auch harmonische Anteile der Erdfehlerströme kompensiert. In DE 198 27 755 A1 ist eine Anordnung beschrieben, bei der ein Hybridfilter, das aus einem passiven und einem aktiven Filter besteht, zwischen ein Wechselspannungsnetz und Erde geschaltet ist, wobei höhere harmonische Komponenten durch das aktive Filter unterdrückt werden. Aus der Publikation WINTER, Klaus M.: Swedish Distribution Networks - a New Method for Earthfault Protection in Cable - and Overhead Systems. In: Proceedings of the Fifth International Conference on Developments in Power System Protection - DPSP '93 York/UK, IEE Conference Publication No. 368, S. 268-270 und aus der Publikation KRÄMER, Stephan; SCHMIDT, Rainer; WINTER, Klaus: Erdschluss-Vollschutzanlage für das 110-kV-Bahnstromnetz. In: Elektrische Bahnen, H.8, 2003, S. 353-362 sind jeweils Anordnungen bekannt, bei denen ein Kompensationsstrom mit einer Hilfswicklung in die Erdschlussdrossel eingespeist wird.

Aus der DE 630 751 C ist eine Einrichtung zur Kompensation des Erdschlussstromes in einem elektrischen Drehstromnetz mit drei Leitern bekannt, bei der ein Sternpunkt an einem Sternpunktbildner über eine aus Induktivitäten bestehende Erdschlusslöscheinrichtung mit einem Erdpunkt verbunden ist, wobei drei Schalter vorgesehen sind, die einen erdschlussbehafteten Leiter über einen Filterkreis zur Kompensation höherer Harmonischer einer Grundfrequenz gegen Erde schalten können.

Der Erfindung liegt daher die Aufgabe zu Grunde, eine verbesserte Anordnung und ein Verfahren zur automatischen Erkennung und Kompensation eines Fehlerstromes bei einem Erdschluss anzugeben.

Die Aufgabe wird erfindungsgemäß durch eine Anordnung mit den Merkmalen des Anspruchs 1 und durch ein Verfahren mit den Merkmalen der Ansprüche 12 bis 15 gelöst.

Vorteilhafte Ausgestaltungen der Erfindung sind Gegenstand der Unteransprüche.

Die erfindungsgemäße Anordnung weist ein elektrisches Drehstromnetz mit drei Leitern auf. Bei dem Drehstromnetz handelt es sich insbesondere um ein Mittelspannungsnetz, dass aus einem Hochspannungsnetz mit einem Einspeisetransformator mit einer Netzspannung versorgt wird. Der Einspeisetransformator weist eine Sekundärseite, speziell eine Mittelspannungsseite mit einem Sternpunkt auf, der über eine Erdschlussdrossel mit einem Erdpunkt verbunden ist. Alternativ kann die Erdschlussdrossel auch über einen Sternpunktbildner angeschlossen sein. Der Erdpunkt ist im allgemeinen eine Erdungsanlage. Die Erdschlussdrossel kann in ihrer Induktivität veränderbar sein. Weiterhin ist eine Einrichtung zur zumindest partiellen Kompensation mindestens einer von einer Grundfrequenz der Netzspannung abweichenden Frequenzkomponente eines infolge eines einpoligen Erdschlusses auftretenden Fehlerstromes vorgesehen. Die Einrichtung umfasst mindestens drei Schalter. Jeder der Leiter ist mit mindestens einem der Schalter verbunden. Die Schalter sind mit einem Filterkreis verbunden oder selbst Teil des Filterkreises, der wiederum mit einem Erdpunkt verbunden ist. Der Filterkreis ist als ein Stromrichter ausgebildet. Die Einrichtung ist bevorzugt in der Nähe des Einspeisetransformators angeordnet. Insbesondere bei Verwendung eines passiven Filterkreises sind die Leiter L1, L2 und L3 mit je einem Schalter verbunden. Die Schalter sind mit dem Filterkreis verbunden und dieser mit dem Erdpunkt, so dass sich eine Serienschaltung von jedem Leiter über den Schalter und den Filterkreis zum Erdpunkt ergibt. Auf diese Weise wird für einen nur an einem beliebigen der drei Leiter L1, L2 oder L3 auftretenden Erdschluss nur ein gemeinsamer Filterkreis benötigt, unabhängig davon, welcher der Leiter L1, L2 oder L3 betroffen ist. Auf diese Weise lassen sich mit der Verwendung nur eines Filterkreises, der wahlweise mit allen Leitern L1, L2 und L3 verbunden werden kann, erheblich die Kosten für die Einrichtung reduzieren. Hierzu kann insbesondere ein dreipoliger Leistungsschalter, der einpolig schaltbar ist, zum Einsatz kommen, so dass sichergestellt ist, dass jeweils nur einer der darin enthaltenen Schalterpole geschlossen ist. Ein solcher dreipoliger Leistungsschalter enthält drei Schalter (auch Schalterpole genannt), die unabhängig voneinander geschaltet werden können. Der Schalter kann manuell, insbesondere jedoch automatisch bedient werden. Hierzu kommt insbesondere eine Erdschlusserfassungseinrichtung, z.B. ein Erdschlussmelderelais, zum Einsatz, welches den vom Erdschluss betroffenen Leiter L1, L2 oder L3 erkennt und infolgedessen den Schalter zwischen dem betroffenen Leiter und dem Filterkreis schließt. Auf diese Weise kann erreicht werden, dass an einer Erdschlussstelle, an der ein Leiter eine leitfähige Verbindung zur Erde besitzt, der von der Grundfrequenz abweichende Anteil des Fehlerstroms so verringert wird, dass ein gegebenenfalls auftretender Lichtbogen verlöscht, der ohne die Kompensation der von der Grundfrequenz abweichenden Frequenzkomponente aufrecht erhalten würde. Damit wird auch eine zu hohe, für Menschen und Tiere lebens- und gesundheitsgefährdende, Berührungs- und Schrittspannung in der Umgebung des Erdschlusses vermieden. Der Einsatz der beschriebenen Einrichtung und des Verfahrens ist auch in Hoch- oder Niederspannungsnetzen möglich.

Prinzipiell kann das Drehstromnetz dabei auch statt mit Resonanzsternpunkterdung mit isoliertem Sternpunkt betrieben werden. Die erfindungsgemäße Anordnung kann gegebenenfalls auch die Aufgabe der Erdschlussdrossel unterstützen oder ganz übernehmen. Wird beispielsweise ein mit einem Erdschluss behafteter Abschnitt des Drehstromnetzes erkannt und abgeschaltet, ändert sich infolgedessen die Erdkapazität des Drehstromnetzes so, dass die Erdschlussdrossel verstellt werden muss. Dieser Vorgang kann sehr lange (mehrere Minuten) dauern. Tritt in diesem Zeitraum ein weiterer Erdschluss im verbliebenen Drehstromnetz auf, entstehen an der Fehlerstelle sehr hohe Fehlerströme bei der Grundfrequenz infolge der noch nicht auf die Erdkapazität eingestellten Erdschlussdrossel. Die Kompensation kann stattdessen jedoch vom als Stromrichter ausgebildeten Filterkreis übernommen oder unterstützt werden. Auch in den Fällen, bei denen beispielsweise im Erdschlussfall infolge einer fehlerhaften Ortung irrtümlich ein fehlerfreier Abgang ausgeschaltet wird, kann die nunmehr veränderte Kompensationsleistung, die nicht kurzfristig durch die Erdschlussdrossel zur Verfügung gestellt werden kann oder wird, vom Filterkreis übernommen werden.

Die zu kompensierende Frequenzkomponente ist vorzugsweise eine Harmonische der Grundfrequenz, insbesondere die fünfte oder die siebte Harmonische, da deren Anteil an dem Fehlerstrom besonders hoch ist. Beispielsweise bei einer Grundfrequenz von 50 Hz, wie in Europa und weiten Teilen der Welt üblich, entspricht die fünfte Harmonische 250 Hz und die siebte Harmonische 350 Hz. Der Filterkreis ist vorzugsweise auf die dominante Harmonische im Fehlerstrom abgestimmt, so dass diese im Filterkreis weitgehend nach Erde kurzgeschlossen und somit an der Erdfehlerstelle weitgehend kompensiert wird. Der Filterkreis kann jedoch auch mehrfrequent sein, so dass Frequenzkomponenten des Fehlerstromes in einem Frequenzband kompensiert werden. Beispielsweise kann das Frequenzband durch den Aufbau des Filterkreises so gestaltet sein, dass Frequenzkomponenten im Bereich von 220 Hz bis 380 Hz und somit sowohl die fünfte als auch die siebte Harmonische kompensiert werden.

In einer bevorzugten Ausführungsform weist die Einrichtung mindestens einen Stromrichter auf, der mit einer Steuereinheit verbunden ist, die den Fehlerstrom erkennt. Die Steuereinheit übernimmt Steuer- und Regelungsaufgaben.

Der Stromrichter wird dabei so gesteuert und/oder geregelt, dass er einen Strom erzeugt, dessen Frequenz und Phasenlage den Fehlerstrom bei einem einpoligen Erdschluss wenigstens teilweise kompensiert. Hierzu werden zum Beispiel die von der Grundfrequenz abweichenden Komponenten vom Stromrichter gegenphasig zum Fehlerstrom erzeugt und eingespeist, wobei der gegenphasige Strom etwa die gleiche Größe wie der Fehlerstrom hat.

Der Stromrichter kann hierzu in Serie zu der Erdschlussdrossel geschaltet sein. Alternativ ist der Stromrichter parallel zu der Erdschlussdrossel geschaltet.

Im als Stromrichter ausgebildeten Filterkreis sind die Schalter Teil des Filterkreises. Der auf diese Weise aktiv gestaltete Filterkreis ist prinzipiell flexibler an eine veränderte Topologie des Drehstromnetzes anpassbar als ein passiver Filterkreis.

Die Schalter sind als steuerbare elektronische Schalter ausgebildet, beispielsweise als Halbleiterbauelemente, wie IGBTs (Insulated Gate Bipolar Transistor). Sie bieten den Vorteil schnellerer Schaltzeiten verglichen mit herkömmlichen Schaltern oder Schalterpolen. Ein den Fehlerstrom an der Erdfehlerstelle zumindest partiell kompensierender Stromfluss wird dann vorzugsweise durch gesteuertes, gepulstes Schalten von Gleichspannungsquellen in den Strompfad des Filterkreises verursacht. Ein aktiver Filterkreis reagiert schneller als eine veränderbare Drossel auf Änderungen der Erdkapazität des Drehstromnetzes, die eine Erhöhung des Fehlerstroms an der Erdfehlerstelle bewirken kann. Dies geschieht beispielsweise dann, wenn bei einem detektierten Erdfehler in einem verzweigten Drehstromnetz der Erdfehler in einem falschen Abzweig lokalisiert und dieser Abzweig daraufhin abgeschaltet wird, während der vom Erdfehler betroffene Abzweig noch unter Spannung bleibt.

Vorzugsweise umfasst die Einrichtung einen in Serie zu der Erdschlussdrossel geschalteten Parallelschwingkreis. Auf diese Weise ergibt sich ein mehrfrequentes Filter, das mit einer gegebenenfalls angepassten oder modifizierten Erdschlussdrossel sowohl den Fehlerstrom der Grundfrequenz als auch den der von der Grundfrequenz abweichenden Frequenzkomponente im Falle eines Erdschlusses kompensiert.

Der Parallelschwingkreis kann verstellbare Komponenten, z.B. verstellbare Drosseln und/oder Kondensatoren enthalten, um ihn auf die im Drehstromnetz vorhandenen und gegebenenfalls veränderlichen Erdkapazitäten abstimmen zu können.

Vorzugsweise ist der Filterkreis als ein mehrfrequenter Filterkreis so ausgebildet, dass er bei mindestens einer ersten Frequenz als Saugkreis und bei mindestens einer zweiten Frequenz als Sperrkreis wirksam ist. In seiner Funktion als Saugkreis schließt er Stromanteile bei der ersten Frequenz zum Erdpunkt hin kurz während er als Sperrkreis einen Stromfluss zum Erdpunkt bei der zweiten Frequenz unterdrückt. Auf diese Weise wird vermieden, dass ein Stromfluss bei dieser zweiten Frequenz über eine Fehlerstelle zustande kommt, so dass keine zusätzlichen unerwünschten Berührungs- und Schrittspannungen an der Fehlerstelle auftreten.

Die zu kompensierende Frequenzkomponente bei der ersten Frequenz ist vorzugsweise eine Harmonische der Grundfrequenz, insbesondere die fünfte oder die siebte Harmonische, da deren Anteil an dem Fehlerstrom besonders hoch ist. Beispielsweise bei einer Grundfrequenz von 50 Hz, wie in Europa und weiten Teilen der Welt üblich, entspricht die fünfte Harmonische 250 Hz und die siebte Harmonische 350 Hz.

Die zweite Frequenz, bei der ein Stromfluss über den Filterkreis unterbunden wird, ist vorzugsweise die Grundfrequenz des Drehstromnetzes. Das gewünschte Verhalten des Filterkreises wird im Falle eines passiven Filterkreises vorzugsweise erreicht, in dem mindestens zwei Drosseln und ein Kondensator angeordnet werden, insbesondere so, dass eine der Drosseln zu einer Parallelschaltung aus der anderen Drossel und dem Kondensator in Serie geschaltet ist. Die Induktivitäten der Drosseln und die Kapazität des Kondensators werden dabei so gewählt, dass sich ein Saugverhalten zumindest bei der ersten Frequenz und ein Sperrverhalten bei der zweiten Frequenz ergibt. Ein mehrfrequenter Filterkreis wird jedoch bevorzugt aktiv als Stromrichter ausgebildet, da bei diesem zur Kompensation mehrerer verschiedener Frequenzkomponenten lediglich die Steuerung angepasst werden muss, während bei einem passiven Filterkreis gegebenenfalls andere Bauelemente oder mehr Bauelemente benötigt werden.

Der als Stromrichter ausgebildete Filterkreis kann auch dann verwendet werden, wenn auf keinem der Leiter ein Erdschluss vorliegt, insbesondere so, dass ein Strom zum Fließen kommt, der im Drehstromnetz vorhandene Blindleistung, wie z.B. Deformationen der Versorgungsspannung (Verzerrung, Unsymmetrie, Einbrüche, etc.) oder eine Verschiebungsblindleistung auf vorgegebene Werte begrenzt oder reduziert.

Ausführungsbeispiele der Erfindung werden im Folgenden anhand einer Zeichnung näher erläutert.

### Darin zeigen:

- Figur 1: eine Anordnung zur Kompensation eines Fehlerstromes an einer Erdschlussstelle bei einem einpoligen Erdschluss in einem Drehstromnetz mit einem Filterkreis,
- Figur 2: eine Anordnung zur Kompensation eines Fehlerstromes an einer Erdschlussstelle bei einem einpoligen Erdschluss in einem Drehstromnetz mit einem mehrfrequenten Filterkreis,
- Figur 3: eine Anordnung zur Kompensation eines Fehlerstromes an einer Erdschlussstelle bei einem einpoligen Erdschluss in einem Drehstromnetz mit einem als Stromrichter ausgebildeten Filterkreis,
- Figur 4: eine Ausführungsform eines Stromrichters, und
- Figur 5: eine weitere Ausführungsform eines Stromrichters.

Einander entsprechende Teile sind in allen Figuren mit den gleichen Bezugszeichen versehen.

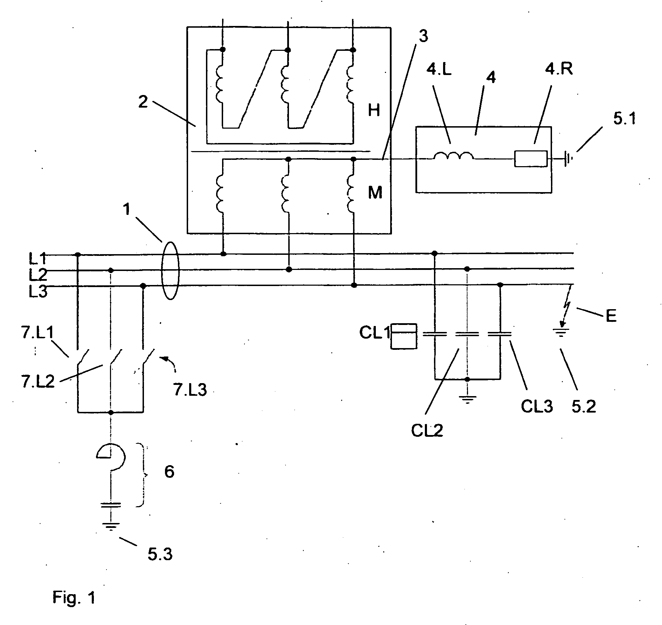

**Figur 1** zeigt eine Anordnung zur Kompensation eines Fehlerstromes bei einem einpoligen Erdschluss E. Ein Drehstromnetz 1 mit den Leitern L1, L2 und L3 ist als Mittelspannungsnetz mit Freileitungen und/oder Erdkabeln ausgeführt. Die Spannung des Drehstromnetzes 1 beträgt 20 kV bei einer Grundfrequenz von 50 Hz und wird über einen Einspeisetransformator 2, der mit einer Hochspannungsseite H an ein nicht dargestelltes Hochspannungsnetz und mit einer Mittelspannungsseite M an das Drehstromnetz 1 angeschlossen ist, eingespeist. Ein auf der Mittelspannungsseite M gelegener Sternpunkt 3 des Einspeisetransformators 2 ist über eine Erdschlussdrossel 4 geerdet, d.h. mit einem Erdpunkt 5.1 verbunden. Bei dem Erdpunkt 5.1 handelt es sich gewöhnlich um eine Erdungsanlage, bei der ein großflächiger Kontakt zur Erde hergestellt wird. Da die Erdschlussdrossel 4 ein reales und kein ideales Betriebsmittel ist, weist sie nicht nur eine Induktivität 4.L auf, sondern ist auch mit einem ohmschen Widerstand 4.R behaftet. Die Leiter L1, L2 und L3 des Drehstromnetzes 1 besitzen jeweils eine Erdkapazität CL1, CL2 und CL3, deren Größe mit der Länge des Drehstromnetzes 1 bzw. mit seiner flächenmäßigen Ausdehnung steigt. Die gezeigten Erdkapazitäten CL1, CL2, CL3 repräsentieren die kapazitive Verkettung der Leiter L1, L2 und L3 mit der Erde. Bei Verwendung von Erdkabeln ist die Erdkapazität CL1, CL2, CL3 bei gleicher Länge etwa um den Faktor 20 ... 40 größer als bei Freileitungen. Am Leiter L3 tritt im gezeigten Ausführungsbeispiel ein Erdschluss E auf, beispielsweise in Form eines Lichtbogens vom Leiter L3 zu einem Erdpunkt 5.2. Der Erdschluss E kann in der Nähe des Einspeisetransformators 2 oder in einem beliebigen Bereich des Drehstromnetzes 1 auftreten. Die Erdkapazität CL3 des Leiters L3 wird dabei nach Erde kurzgeschlossen und ist somit 0. Dabei erhöhen sich die Spannungen an den Erdkapazitäten CL1 und CL2 jeweils um den Faktor √3. Über den Erdschluss E an der Erdschlussstelle fließt daher eine kapazitive Fehlerstromkomponente. Ist die Netzspannung unverzerrt, d.h. nahezu ideal sinusförmig, wird diese kapazitive Fehlerstromkomponente durch die Erdschlussdrossel 4 kompensiert. Es bleibt an der Erdschlussstelle lediglich ein Reststrom, der aus einer Wirkstrom- und einer Blindstromkomponente besteht. Die Blindstromkomponente ergibt sich aus einer nicht exakten Abstimmung eines aus der Erdschlussdrossel 4 und den Erdkapazitäten CL1, CL2 gebildeten Schwingkreises. Die Wirkstromkomponente resultiert auch aus den ohmschen Verlusten der Erdschlussdrossel 4. Die Netzspannung in Drehstromnetzen ist jedoch infolge von Netzrückwirkungen moderner, mit Schaltnetzteilen ausgestatteter Geräte und stromrichtergespeister Anlagen in Industrie und Haushalten nicht ideal sinusförmig, sondern enthält harmonische Frequenzkomponenten der Grundfrequenz, insbesondere die fünfte und siebte Harmonische, d.h. Oberschwingungen mit Frequenzen von 250 Hz und 350 Hz. Die in Drehstromnetzen 1 mit so verzerrter Netzspannung im Falle eines Erdschlusses E auftretenden harmonische Anteile der Fehlerströme machen einen erheblichen Anteil des Effektivwertes des Gesamtfehlerstromes (auch Reststrom genannt) aus. Diese harmonischen Anteile des Fehlerstroms können von der Erdschlussdrossel 4 nicht kompensiert werden, da diese nur auf die Grundfrequenz abgestimmt ist und erhöhen damit den Reststrom. Zum Kompensieren dieser harmonischen Anteile des Fehlerstroms an der Erdschlussstelle dient ein Filterkreis 6, der in der Art eines Reihenschwingkreises ausgebildet sein kann. Jeder Leiter L1, L2, L3 ist mit einem Schalter 7.L1, 7.L2, 7.L3 mit dem Filterkreis 6 verbunden, der seinerseits mit einem Erdpunkt 5.3 verbunden ist, der mit dem Erdpunkt 5.1 identisch sein kann. Im Fall eines Erdschlusses E am Leiter L3 wird der Schmalter 7.L3 geschlossen und der Fehlerstrom der harmonischen Frequenzkomponente im auf diese Frequenz abgestimmten Filterkreis gegen Erde kurzgeschlossen, so dass er an der Stelle des Erdschlusses E reduziert wird. Ein dort gegebenenfalls auftretender Lichtbogen verlischt und eine Berührungs- und Schrittspannung in der Umgebung des Erdschlusses E fällt unter einen Wert, der für Menschen oder Tiere lebens- oder gesundheitsgefährlich ist. Der Filterkreis 6 ist hierzu auf die dominante Harmonische, im Allgemeinen die fünfte Harmonische des Fehlerstromes abgestimmt. Der Filterkreis 6 kann jedoch auch mehrfrequent sein, so dass Frequenzkomponenten des Fehlerstromes in einem Frequenzband kompensiert werden. Beispielsweise kann das Frequenzband durch den Aufbau des Filterkreises 6 so gestaltet sein, dass Frequenzkomponenten im Bereich von 220 Hz bis 380 Hz und somit sowohl die fünfte als auch die siebte Harmonische kompensiert werden. Die Schalter 7.L1, 7.L2, 7.L3 können manuell oder vorzugsweise automatisch bedient werden. Hierzu kann eine nicht dargestellte Erdschlusserfassungseinrichtung zum Einsatz kommen, welche den Erdschluss erkennt und den Schalter 7.L3 zwischen dem betroffenen Leiter L3 und dem Filterkreis schließt. Die Erkennung des Erdschlusses E ist zum Beispiel möglich, indem die Effektivwerte der Spannungen der Leiter L1, L2, L3 gegenüber Erde gemessen werden. Im fehlerfreien Betrieb sind diese Spannungen einander betragsmäßig in etwa gleich, aber um 2π/3 phasenverschoben. Im Falle eines Erdschlusses E wird die Spannung des betroffenen Leiters L3 jedoch gegenüber Erde Null und die Spannung der anderen Leiter L1, L2 steigt um den Faktor √3. Auf diese Weise kann die Erdschlusserfassungseinrichtung den jeweils betroffenen Leiter L1, L2 oder L3 identifizieren und den entsprechenden Schalter 7.L1, 7.L2, 7.L3 schließen.

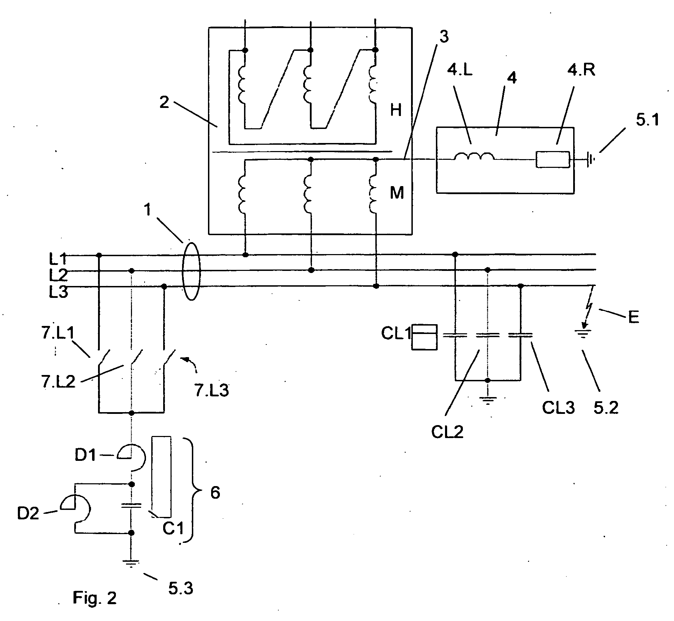

**Figur 2** zeigt eine Anordnung zur Kompensation eines Fehlerstromes bei einem einpoligen Erdschluss E. Ein Drehstromnetz 1 mit den Leitern L1, L2 und L3 ist als Mittelspannungsnetz mit Freileitungen-und/oder Erdkabeln ausgeführt. Die Spannung des Drehstromnetzes 1 beträgt 20 kV bei einer Grundfrequenz von 50 Hz und wird über einen Einspeisetransformator 2, der mit einer Hochspannungsseite H an ein nicht dargestelltes Hochspannungsnetz und mit einer Mittelspannungsseite M an das Drehstromnetz 1 angeschlossen ist, eingespeist. Ein auf der Mittelspannungsseite M gelegener Sternpunkt 3 des Einspeisetransformators 2 ist über eine Erdschlussdrossel 4 geerdet, d.h. mit einem Erdpunkt 5.1 verbunden. Bei dem Erdpunkt 5.1 handelt es sich gewöhnlich um eine Erdungsanlage, bei der ein großflächiger Kontakt zur Erde hergestellt wird. Da die Erdschlussdrossel 4 ein reales und kein ideales Betriebsmittel ist, weist sie nicht nur eine Induktivität 4.L auf, sondern ist auch mit einem ohmschen Widerstand 4.R behaftet. Die Leiter L1, L2 und L3 des Drehstromnetzes 1 besitzen jeweils eine Erdkapazität CL1, CL2 und CL3, deren Größe mit der Länge des Drehstromnetzes 1 bzw. mit seiner flächenmäßigen Ausdehnung steigt. Die gezeigten Erdkapazitäten CL1, CL2, CL3 repräsentieren die kapazitive Verkettung der Leiter L1, L2 und L3 mit der Erde. Bei Verwendung von Erdkabeln ist die Erdkapazität CL1, CL2, CL3 bei gleicher Länge etwa um den Faktor 20 ... 40 größer als bei Freileitungen. Am Leiter L3 tritt im gezeigten Ausführungsbeispiel ein Erdschluss E auf, beispielsweise in Form eines Lichtbogens vom Leiter L3 zu einem Erdpunkt 5.2. Der Erdschluss E kann in der Nähe des Einspeisetransformators 2 oder in einem beliebigen Bereich des Drehstromnetzes 1 auftreten. Die Erdkapazität CL3 des Leiters L3 wird dabei nach Erde kurzgeschlossen und ist somit 0. Dabei erhöhen sich die Spannungen an den Erdkapazitäten CL1 und CL2 jeweils um den Faktor √3. Über den Erdschluss E an der Erdschlussstelle fließt daher eine kapazitive Fehlerstromkomponente. Ist die Netzspannung unverzerrt, d.h. nahezu ideal sinusförmig, wird diese kapazitive Fehlerstromkomponente durch die Erdschlussdrossel 4 kompensiert. Es bleibt an der Erdschlussstelle lediglich ein Reststrom, der aus einer Wirkstrom- und einer Blindstromkomponente besteht. Die Blindstromkomponente ergibt sich aus einer nicht exakten Abstimmung eines aus der Erdschlussdrossel 4 und den Erdkapazitäten CL1, CL2 gebildeten Schwingkreises. Die Wirkstromkomponente resultiert auch aus den ohmschen Verlusten der Erdschlussdrossel 4. Die Netzspannung in Drehstromnetzen ist jedoch infolge von Netzrückwirkungen moderner, mit Schaltnetzteilen ausgestatteter Geräte und stromrichtergespeister Anlagen in Industrie und Haushalten nicht ideal sinusförmig, sondern enthält harmonische Frequenzkomponenten der Grundfrequenz, insbesondere die fünfte und siebte Harmonische, d.h. Oberschwingungen mit Frequenzen von 250 Hz und 350 Hz. Die in Drehstromnetzen 1 mit so verzerrter Netzspannung im Falle eines Erdschlusses E auftretenden harmonische Anteile der Fehlerströme machen einen erheblichen Anteil des Effektivwertes des Gesamtfehlerstromes (auch Reststrom genannt) aus. Diese harmonischen Anteile des Fehlerstroms können von der Erdschlussdrossel 4 nicht kompensiert werden, da diese nur auf die Grundfrequenz abgestimmt ist und erhöhen damit den Reststrom. Zum Kompensieren dieser harmonischen Anteile des Fehlerstroms an der Erdschlussstelle dient ein Filterkreis 6. Jeder Leiter L1, L2, L3 ist mit einem Schalter 7.L1, 7.L2, 7.L3 mit dem Filterkreis 6 verbunden, der seinerseits mit einem Erdpunkt 5.3 verbunden ist, der mit dem Erdpunkt 5.1 identisch sein kann. Im Fall eines Erdschlusses E am Leiter L3 wird der Schalter 7.L3 geschlossen und der Fehlerstrom der harmonischen Frequenzkomponente im auf diese Frequenz abgestimmten Filterkreis gegen Erde kurzgeschlossen, so dass er an der Stelle des Erdschlusses E reduziert wird. Ein dort gegebenenfalls auftretender Lichtbogen verlischt und eine Berührungs- und Schrittspannung in der Umgebung des Erdschlusses E fällt unter einen Wert, der für Menschen oder Tiere lebens- oder gesundheitsgefährlich ist. Der Filterkreis 6 ist hierzu auf die dominante Harmonische, im Allgemeinen die fünfte Harmonische des Fehlerstromes abgestimmt. Der Filterkreis 6 kann jedoch auch mehrfrequent sein, so dass Frequenzkomponenten des Fehlerstromes in einem Frequenzband kompensiert werden. Beispielsweise kann das Frequenzband durch den Aufbau des Filterkreises 6 so gestaltet sein, dass Frequenzkomponenten im Bereich von 220 Hz bis 380 Hz und somit sowohl die fünfte als auch die siebte Harmonische kompensiert werden. Die Schalter 7.L1, 7.L2, 7.L3 können manuell oder vorzugsweise automatisch bedient werden. Hierzu kann eine nicht dargestellte Erdschlusserfassungseinrichtung zum Einsatz kommen, welche den Erdschluss erkennt und den Schalter 7.L3 zwischen dem betroffenen Leiter L3 und dem Filterkreis schließt. Die Erkennung des Erdschlusses E ist zum Beispiel möglich, indem die Effektivwerte der Spannungen der Leiter L1, L2, L3 gegenüber Erde gemessen werden. Im fehlerfreien Betrieb sind diese Spannungen einander betragsmäßig in etwa gleich, aber um 2π/3 phasenverschoben. Im Falle eines Erdschlusses E wird die Spannung des betroffenen Leiters L3 jedoch gegenüber Erde Null und die Spannung der anderen Leiter L1, L2 steigt um den Faktor √3. Auf diese Weise kann die Erdschlusserfassungseinrichtung den jeweils betroffenen Leiter L1, L2 oder L3 identifizieren und den entsprechenden Schalter 7.L1, 7.L2, 7.L3 schließen. Die Schalter 7.L1, 7.L2, 7.L3 können als mechanische oder elektronische Schalter ausgebildet sein.

Der Filterkreis 6 ist aus zwei Drosseln D1, D2 und einem Kondensator C1 so aufgebaut, dass sich für die erwähnten Stromharmonischen ein Saugkreisverhalten (Reihenschwingkreis gebildet aus D1 und der Parallelschaltung von C1 und D2) und bei der Grundfrequenz ein Sperrverhalten (Parallelschwingkreis gebildet aus C1 und D2) ergibt, so dass die höheren Stromharmonischen nach dem Erdpunkt 5.3 abgeleitet werden und ein Stromfluss bei der Grundfrequenz über den Filterkreis unterdrückt wird.

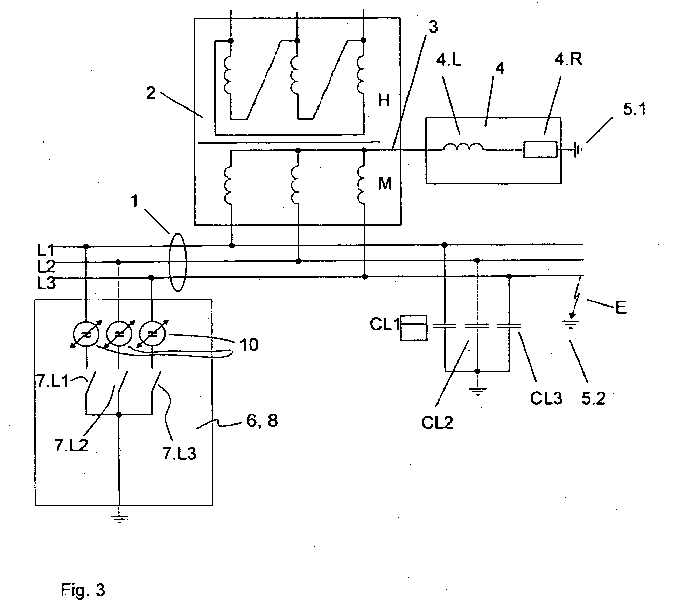

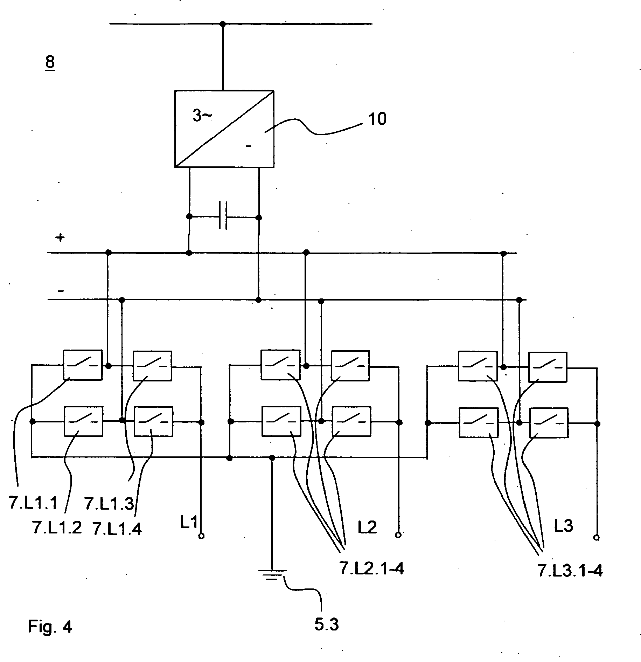

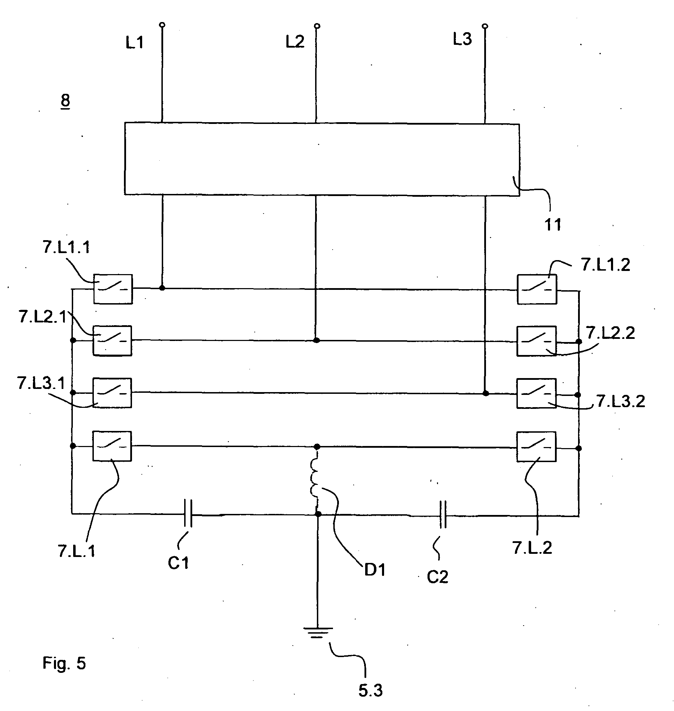

**Figur 3** zeigt eine Ausführungsform, in der der Filterkreis 6 als Stromrichter 8 ausgebildet ist. Die Schalter 7.L1, 7.L2, 7.L3 sind hierbei Teil des Filterkreises 6 bzw. Stromrichters 8. Vorzugsweise sind die Schalter dabei als elektronische Schalter ausgebildet, beispielsweise als Halbleiterbauelemente wie IGBTs. Der Stromrichter 8 umfasst weiter drei Spannungsquellen 10 mit steuerbarer und/oder regelbarer Spannung und/oder Frequenz, die durch entsprechendes Betätigen der Schalter 7.L1, 7.L2, 7.L3 dem betroffenen Leiter L1, L2, L3 einen den Fehlerstrom an der Erdfehlerstelle E zumindest partiell kompensierenden Stromfluss aufprägen, der an der Erdfehlerstelle E gegenphasig zum Fehlerstrom ist. Der Stromrichter 8 kann hierzu als mehrfrequenter Filterkreis ausgebildet sein, um den Erdfehlerstrom bei mehreren Frequenzen, insbesondere Harmonischen der Grundfrequenz zu kompensieren. Liegt auf keinem der Leiter L1, L2, L3 ein Erdschluss vor, kann der Stromrichter 8 so gesteuert werden, dass ein Strom zum Fließen kommt, der im Drehstromnetz 1 vorhandene Blindleistung, wie z.B. Deformationen der Versorgungsspannung (Verzerrung, Unsymmetrie, Einbrüche, etc.) oder eine Verschiebungsblindleistung auf vorgegebene Werte begrenzt oder reduziert. Die Darstellung des Stromrichters 8 in der Figur ist eine Prinzipdarstellung. Konkrete Ausführungsformen sind in den Figuren 4 und 5 gezeigt.

**Figur 4** zeigt eine Ausführungsform des in Figur 3 gezeigten Stromrichters 8.

Die Schalter 7.L1, 7.L2, 7.L3 können auch in den in Fig. 1 und 2 gezeigten Ausführungsbeispielen als elektronische Schalter ausgebildet sein. Eine Spannungsquelle 10 ist als ein Dreiphasengleichrichter ausgebildet, der aus einem dreiphasigen Netz gespeist wird. Dabei kann es sich um das Drehstromnetz 1 oder ein anderes Netz handeln. Ebenso ist eine zweiphasige Einspeisung möglich. Für jeden der Leiter L1, L2, L3 sind vier Schalter 7.L1.1-4, 7.L2.1-4, 7.L3.1-4 vorgesehen, die jeweils als Graetz-Brücke geschaltet sind. Wird beispielsweise auf dem Leiter L1 ein Erdfehler detektiert, werden die Schalter 7.L1.1-4 so geschaltet, dass dem Leiter L1 (beispielsweise mittels einer Pulsweitenmodulation oder einer variablen Spannung der Spannungsquelle 10) ein den Erdfehlerstrom zumindest partiell kompensierender Stromfluss aufgeprägt wird. Soll dem Leiter L1 beispielsweise ein positiver Strom aufgeprägt werden, müssen gleichzeitig die Schalter 7.L1.3 und 7.L1.2 schließen. Für einen negativen Strom sind es entsprechend die Schalter 7.L1.1 und 7.L1.4. Sinngemäß gilt dies für die den Leitern L2 und L3 zugeordneten Schalter 7.L2.1-4 und 7.L3.1-4. Zwischen den Schaltern 7.L1.1-4, 7.L2.1-4, 7.L3.1-4 und den Leitern L1, L2, L3 kann jeweils ein Transformator vorgesehen sein, da die als Halbleiterbauelemente ausgebildeten Schalter 7.L1.1-4, 7.L2.1-4, 7.L3.1-4 nur begrenzte Sperrspannungen vertragen.

**Figur 5** zeigt eine weitere Ausführunsgsform des Stromrichters 8. Hierbei wird eine Gleichspannung über den Kondensatoren C1 und C2 durch gesteuertes Schalten der Schalter 7.L1.1, 7.L1.2, 7.L2.1, 7.L2.2, 7.L3.1, 7.L3.2 und somit Gleichrichtung der Wechselspannung und Aufladung der Kondensatoren C1, C2 erzeugt. Im Erdfehlerfall wird die Gleichspannung gepulst (beispielsweise per Pulsweitenmodulation) dem betroffenen Leiter L1, L2, L3 aufgeprägt, indem beispielsweise bei einem Erdfehler auf dem Leiter L1 die Schalter 7.L1.1, 7.L1.2, 7.L.1, 7.L.2 entsprechend gesteuert werden. Die Drossel D1 dient dem Schutz der elektronischen Schalter 7.L1.1, 7.L1.2, 7.L2.1, 7.L2.2, 7.L3.1, 7.L3.2, 7.L.1, 7.L.2.

Die Einrichtung kann auch einen Stromrichter 8 umfassen, der in Serie zu der Erdschlussdrossel 4 geschaltet ist. Dabei ist es für seine Funktion unerheblich ob er sich zwischen der Erdschlussdrossel 4 und dem Erdpunkt 5.1 oder zwischen der Erdschlussdrossel 4 und dem Sternpunkt 3 befindet. Eine mit dem Stromrichter 8 verbundene, nicht gezeigte Steuereinheit erkennt den Erdschluss E und steuert und/oder regelt den Stromrichter 8 bei Vorliegen eines Erdschlusses E so, dass er einen Strom erzeugt, dessen Frequenz und Phasenlage den Fehlerstrom wenigstens teilweise kompensiert. Hierzu werden zum Beispiel die von der Grundfrequenz abweichenden Frequenzkomponenten vom Stromrichter gegenphasig zum Fehlerstrom erzeugt und eingespeist. Der Stromrichter kann als Umrichter mit Gleichspannungszwischenkreis ausgebildet sein. Alternativ kann der Stromrichter 8 parallel zu der Erdschlussdrossel 4 statt seriell geschaltet sein. In diesem Fall steuert der Stromrichter 8 die über der Erdschlussdrossel 4 abfallende Spannung so, dass ein dadurch durch sie fließender Strom den Fehlerstrom kompensiert.

Statt des Stromrichters 8 kann auch ein Parallelschwingkreis 9 in Serie zu der Erdschlussdrossel 4 geschaltet sein. Zusammen mit der zu diesem Zweck in ihrer Induktivität 4.L angepassten Erdschlussdrossel 4 ergibt sich so ein mehrfrequentes Filter, das sowohl den Fehlerstrom der Grundfrequenz als auch den der von der Grundfrequenz abweichenden Frequenzkomponente kompensiert. Der Parallelschwingkreis kann verstellbare Komponenten, z.B. verstellbare Drosseln und/oder Kondensatoren enthalten, um ihn auf die im Drehstromnetz vorhandenen und gegebenenfalls veränderlichen Kapazitäten abstimmen zu können.

Das Drehstromnetz 1 kann auch andere Netzspannungen aufweisen.

Eine Sternpunkterdung kann statt an einem Einspeisetransformator auch an einem Sternpunktbildner vorgenommen werden. Die in den Ausführungsbeispielen gezeigten Lösungen zur Kompensation eines Fehlerstromes können auch am Sternpunkt 3 dieses Stempunktbildners angewandt werden.

Die in den Ausführungsbeispielen gezeigten Anordnungen zur Kompensation eines Fehlerstromes bei einem Erdschluss E sind miteinander kombinierbar.

Die Einrichtung kann auch verwendet werden, um die Erdfehlerstelle E zu lokalisieren. Hierzu wird der als Stromrichter 8 ausgebildete Filterkreis 6 im erdschlussfehlerfreien Zustand des Drehstromnetzes 1 so gesteuert, dass ein Nullstrom (beispielsweise mit einer Frequenz zwischen 0.1 Hz und 2000 Hz) zum Fließen kommt, der unter Nutzung der entsprechenden Komponenten der Netzspannung zur periodischen Ermittlung frequenzabhängiger Nulladmittanzen benutzt wird.
Es werden auf diese Weise die Nulladmittanz des Drehstromnetzes 1 (aus den Nullströmen der Leiter-Erdpotential-Verbindungen) und die Nulladmittanzen der Leitungsabgänge (aus den Nullströmen der Leitungsabgänge) bestimmt. Die auf diese Weise ermittelten Nulladmittanzen werden in einer Erfassungseinrichtung als Sollwert verwendet. Im einpoligen Erdfehlerfall ändert sich die mit einer Frequenz kleiner als die Grundfrequenz ermittelte Nulladmittanz des erdfehlerbehafteten Leitungsabgangs. Aus Vergleich mit dem Sollwert wird der erdfehlerbehaftete Abgang bestimmt. Der Nulladmittanzvergleich, der bei einer Ermittlung der o. g. Nulladmittanzen mit Frequenzen größer als die Grundfrequenz vorgenommen wird, gestattet unter Nutzung der elektrischen Parameter des Leitungsabgangs die Bestimmung des Fehlerortes (Abstand des Fehlerortes von Messort der Nulladmittanz).

### BEZUGSZEICHENLISTE

- 1: Drehstromnetz
- 2: Einspeisetransformator
- 3: Sternpunkt
- 4: Erdschlussdrossel
- 4.L: Induktivität der Erdschlussdrossel
- 4.R: ohmscher Widerstand der Erdschlussdrossel
- 5: Erdpunkt
- 6: Filterkreis
- 7: Schalter
- 8: Stromrichter
- 9: Parallelschwingkreis
- 10: Spannungsquelle
- 11: HF-Filter
- CL1, CL2, CL3: Erdkapazität
- C1, C2: Kondensator
- D1, D2: Drossel
- E: Erdschluss
- H: Hochspannungsseite
- M: Mittelspannungsseite
- L1, L2, L3: Leiter

## Patentansprüche

1. Anordnung zur Kompensation eines Fehlerstromes bei einem einpoligen Erdschluss (E), insbesondere in einem elektrischen Drehstromnetz (1) mit drei Leitern (L1, L2, L3), bei der mindestens ein Sternpunkt (3) auf einer Sekundärseite mindestens eines Einspeisetransformators (2) oder an einem Sternpunktbildner zumindest über eine Erdschlussdrossel (4) mit einem Erdpunkt (5.1) verbunden ist, wobei mindestens eine Einrichtung zur zumindest partiellen Kompensation mindestens einer von einer Grundfrequenz einer Netzspannung abweichenden Frequenzkomponente des Fehlerstromes vorgesehen ist, wobei die Einrichtung mindestens drei Schalter (7) umfasst, wobei die Leiter (L1, L2, L3) jeweils mit mindestens einem der Schalter (7) verbunden sind, wobei die Schalter (7) mit einem Filterkreis (6) verbunden oder Teil des Filterkreises sind, wobei der Filterkreis (6) mit einem Erdpunkt (5.1, 5.3) verbunden ist und wobei jeder der Schalter (7) manuell und/oder automatisch mittels einer Erdschlusserfassungseinrichtung, welche den Erdschluss (E) erkennt, betätigbar ist, **dadurch gekennzeichnet, dass** die Einrichtung mindestens einen Stromrichter (8) umfasst, wobei der Filterkreis (6) als Stromrichter (8) ausgebildet ist.

2. Anordnung nach Anspruch 1, **dadurch gekennzeichnet, dass** die Frequenzkomponente des Fehlerstromes eine Harmonische der Grundfrequenz ist.

3. Anordnung nach Anspruch 2, **dadurch gekennzeichnet, dass** die Frequenzkomponente des Fehlerstromes die fünfte und/oder siebte Harmonische der Grundfrequenz ist.

4. Anordnung nach Anspruch 1, **dadurch gekennzeichnet, dass** der Stromrichter (8) in Serie zu der Erdschlussdrossel (4) geschaltet ist.

5. Anordnung nach Anspruch 1, **dadurch gekennzeichnet, dass** der Stromrichter (8) parallel zu der Erdschlussdrossel (4) geschaltet ist.

6. Anordnung nach einem der Ansprüche 1 bis 5, **dadurch gekennzeichnet, dass** für den Stromrichter (4) eine Steuereinheit vorgesehen ist, die das elektrische Drehstromnetz (1) überwacht und den Stromrichter (8) zumindest bezüglich Frequenz und Phasenlage eines Stromes und/oder einer Spannung steuert und/oder regelt.

7. Anordnung nach einem der vorhergehenden Ansprüche, **dadurch-gekennzeichnet, dass** die Einrichtung einen in Serie zu der Erdschlussdrossel (4) geschalteten Parallelschwingkreis umfasst.

8. Anordnung nach Anspruch 7, **dadurch gekennzeichnet, dass** der Parallelschwingkreis verstellbare Komponenten enthält.

9. Anordnung nach einem der vorhergehenden Ansprüche, **dadurch gekennzeichnet, dass** die Schalter (7) als steuerbare elektronische Schalter ausgebildet sind.

10. Anordnung nach einem der vorhergehenden Ansprüche, **dadurch gekennzeichnet, dass** der Filterkreis (6) als ein mehrfrequenter Filterkreis so ausgelegt ist, dass er bei mindestens einer ersten Frequenz als Saugkreis und bei mindestens einer zweiten Frequenz als Sperrkreis wirksam ist.

11. Anordnung nach Anspruch 10, **dadurch gekennzeichnet, dass** die zweite Frequenz die Grundfrequenz ist.

12. Verfahren zur Kompensation eines Fehlerstromes bei einem einpoligen Erdschluss (E) mit einer Anordnung nach einem der Ansprüche 1 bis 11, **dadurch gekennzeichnet, dass** ein Drehstromnetz auf Erdschlüsse überwacht wird und dass bei Vorliegen eines einpoligen Erdschlusses eines Leiters (L1, L2, L3) ein Schalter (7) zum Verbinden des Leiters (L1, L2, L3) mit einem als Stromrichter ausgebildeten Filterkreis (6), der mit einem Erdpunkt (5.1, 5.3) verbunden ist, manuell oder automatisch betätigt wird.

13. Verfahren zur Kompensation eines Fehlerstromes bei einem einpoligen Erdschluss (E) mit einer Anordnung nach einem der Ansprüche 1 bis 11, **dadurch gekennzeichnet, dass** ein Drehstromnetz auf Erdschlüsse überwacht wird und dass bei Vorliegen eines einpoligen Erdschlusses eines Leiters (L1, L2, L3) mittels mindestens eines elektronischen Schalters (7) eines als Stromrichter (8) ausgebildeten Filterkreises (6) zwischen dem Leiter (L1, L2, L3) und einem Erdpunkt (5.1, 5.3) ein zumindest eine Frequenzkomponente eines Erdfehlerstroms zumindest partiell kompensierender Stromfluss verursacht wird.

14. Verfahren zur Lokalisierung eines Erdschlusses in einem Drehstromnetz (1) mit einer Anordnung nach einem der Ansprüche 1 bis 11, **dadurch gekennzeichnet, dass** dem Drehstromnetz (1) im erdfehlerfreien Betrieb durch einen Stromrichter (8) ein Nullstrom mit einer Frequenz von 0.1 Hz bis 2000 Hz aufgeprägt wird, der zur periodischen Ermittlung von frequenzabhängigen Nulladmittanzen benutzt wird, die als Sollwert in einer Erfassungsvorrichtung gespeichert werden, und dass durch Vergleich der im Falle eines einpoligen Erdschlusses (E) auf gleiche Weise ermittelten Nulladmittanzen mit dem Sollwert ein mit dem Erdschluss (E) behafteter Leiter (L1, L2, L3) und ein Abstand eines Ortes des Erdschlusses von einem Einbauort des Stromrichters (8) bestimmt wird.

15. Verfahren zu Kompensation von Blindleistung in einem Drehstromnetz (1) mit drei Leitern (L1, L2, L3) mittels einer Anordnung nach einem der Ansprüche 1 bis 11, bei dem das Drehstromnetz (1) auf Blindleistung überwacht wird und wobei dem Drehstromnetz (1) bei Vorliegen von Blindleistung ein die Blindleistung zumindest partiell kompensierender Strom mittels eines mit einem Erdpunkt (5.1, 5.3) verbundenen Stromrichters (8) aufgeprägt wird, wobei der Stromrichter (6) gesteuert und/oder geregelt mittels mindestens eines von mindestens drei Schaltern (7) mit mindestens einem der Leiter (L1, L2, L3) verbunden wird.

## Claims

1. Arrangement for compensating a fault current occurring in the event of a single-phase-to-earth/ground fault (E), in particular, in an electrical three-phase system (1) having three conductors (L1, L2, L3), in which at least one neutral point (3) is connected at a secondary side of at least one power supply transformer (2) or at a neutral earthing/grounding transformer at least via one neutral earthing/grounding reactor (4) to an earthing/grounding point (5.1), while at least one device is provided at least for the partial compensation of at least one frequency component of the fault current diverging from a fundamental frequency of a system voltage, while the device comprises at least three switches (7), while the conductors (L1, L2, L3) are each connected to at least one of the switches (7), while the switches (7) are connected to a filter circuit (6) or are part of the filter circuit, while the filter circuit (6) is connected to an earthing/grounding point (5.1, 5.3) and while each of the switches (7) is actuable manually and/or automatically using an earth/ground fault detection device which detects the earth/ground fault (E), **characterised in that** the device comprises at least one power converter (8) while the filter circuit (6) is designed as a power converter (8).

2. Arrangement as claimed in claim 1, **characterised in that** the frequency component of the fault current is an harmonic of the fundamental frequency.

3. Arrangement as claimed in claim 2, **characterised in that** the frequency component of the fault current is the fifth and/or seventh harmonic of the fundamental frequency.

4. Arrangement as claimed in claim 1, **characterised in that** the power converter (8) is connected in series to the neutral earthing/grounding reactor (4).

5. Arrangement as claimed in claim 1, **characterised in that** the power converter (8) is connected in parallel to the neutral earthing/grounding reactor (4).

6. Arrangement as claimed in any claim 1 through 5, **characterised in that** a control unit is provided for the power converter (4) and monitors the electrical three-phase system (1) and controls and/or regulates the power converter (8) at least with regard to the frequency and phase angle of a current and/or a voltage.

7. Arrangement as claimed in any preceding claim, **characterised in that** the device comprises one anti-resonant circuit connected in series to the neutral earthing/grounding reactor (4).

8. Arrangement as claimed in claim 7, **characterised in that** the anti-resonant circuit comprises adjustable components.

9. Arrangement as claimed in any preceding claim, **characterised in that** the switches (7) are designed as controllable electronic switches.

10. Arrangement as claimed in any preceding claim, **characterised in that** the filter circuit (6) is designed as a multi-frequency filter circuit such that it acts as a series resonant circuit for at least one first frequency and as a rejection circuit for at least one second frequency.

11. Arrangement as claimed in claim 10, **characterised in that** the second frequency is the fundamental frequency.

12. Method for compensating a fault current occurring in the event of a single-phase-to-earth/ground fault (E) using an arrangement as claimed in any claim 1 through 11, **characterised in that** a three-phase system is monitored for earth/ground faults, and **in that**, when a single-phase-to-earth/ground fault occurs in a conductor (L1, L2, L3), a switch (7) is actuated manually or automatically for connecting the conductor (L1, L2, L3) to a filter circuit (6) which is designed as a power converter and connected to an earthing/grounding point (5.1, 5.3).

13. Method for compensating a fault current occurring in the event of a single-phase-to-earth/ground fault (E) using an arrangement as claimed in any claim 1 through 11, **characterised in that** a three-phase system is monitored for earth/ground faults and **in that**, when a single-phase-to-earth/ground fault occurs in a conductor (L1, L2, L3), at least one electronic switch (7) of a filter circuit (6) which is designed as a power converter (8) is used to cause a current flow which at least partially compensates at least one frequency component of an earth/ground fault current between the conductor (L1, L2, L3) and an earthing/grounding point (5.1, 5.3).

14. Method for localising an earth/ground fault in a three-phase system (1) using an arrangement as claimed in any claim 1 through 11, **characterised in that** a zero current having a frequency of between 0.1 Hz and 2000 Hz is impressed on the three-phase system (1) by a power converter (8) during earth/ground-fault free operation, and is used to periodically determine frequency-dependent zero-phase admittances which are stored as a setpoint value in a detection device, and **in that** a comparison of the zero-phase admittances determined in the same way in the event of a single-phase-to-earth/ground fault (E) with such setpoint value is used to determine a conductor (L1, L2, L3) affected by the earth/ground fault (E) and a distance of a location of the earth/ground fault from the installation location of the power converter (8).

15. Method for compensating reactive power in a three-phase system (1) having three conductors (L1, L2, L3) using an arrangement as claimed in any claims 1 through 11 in which the three-phase system (1) is monitored for reactive power and while, if reactive power occurs, a current which compensates the reactive power at least in part is impressed on the that three-phase system (1) using a power converter (8) connected to an earthing/grounding point (5.1, 5.3), while the power converter (6) is controlled and/or regulated using at least one of at least three switches (7) and connected to at least one of the conductors (L1, L2, L3).

## Revendications

1. Montage pour la compensation d'un courant de fuite en cas de défaut unipolaire à la terre (E), en particulier dans un réseau électrique triphasé (1) avec trois conducteurs (L1, L2, L3), où au moins un contact à la terre (3) sur un côté secondaire d'au moins un transformateur d'alimentation (2) ou sur un transformateur triphasé de mise à la terre est relié au moins par une bobine d'écoulement (4) à un point neutre à la terre (5.1), au moins un dispositif étant prévu pour une compensation au moins partielle d'au moins une composante de fréquence du courant de fuite différant d'une fréquence de base d'une tension de réseau, le dispositif comprenant au moins trois commutateurs (7), les conducteurs (L1, L2, L3) étant reliés chacun à au moins un des commutateurs (7), les commutateurs (7) étant reliés à un circuit de filtrage (6) ou faisant partie du circuit de filtrage, le circuit de filtrage (6) étant relié à un point neutre à la terre (5.1, 5.3) et chaque commutateur (7) étant actionnable manuellement et/ou automatiquement au moyen d'un dispositif de détermination de perte à la terre détectant le défaut à la terre (E), **caractérisé en ce que** le dispositif comprend au moins un convertisseur de courant (8), le circuit de filtrage (6) étant réalisé comme convertisseur de courant (8).

2. Montage selon la revendication 1, **caractérisé en ce que** la composante de fréquence du courant de fuite est une harmonique de la fréquence de base.

3. Montage selon la revendication 2, **caractérisé en ce que** la composante de fréquence du courant de fuite est la cinquième et/ou la septième harmonique de la fréquence de base.

4. Montage selon la revendication 1, **caractérisé en ce que** le convertisseur de courant (8) est monté en série avec la bobine d'écoulement (4).

5. Montage selon la revendication 1, **caractérisé en ce que** le convertisseur de courant (8) est monté en parallèle avec la bobine d'écoulement (4).

6. Montage selon l'une des revendications 1 à 5, **caractérisé en ce qu'**une unité de commande est prévue pour le convertisseur de courant (8), laquelle surveille le réseau électrique triphasé (1) et commande et/ou régule le convertisseur de courant (8) au moins quant à la fréquence et à la relation de phase d'un courant et /ou d'une tension.

7. Montage selon l'une des revendications précédentes, **caractérisé en ce que** le dispositif comprend un circuit oscillant parallèle monté en série avec la bobine d'écoulement (4).

8. Montage selon la revendication 7, **caractérisé en ce que** le circuit oscillant parallèle comprend des composantes réglables.

9. Montage selon l'une des revendications précédentes, **caractérisé en ce que** les commutateurs (7) sont réalisés comme commutateurs électroniques commandables.

10. Montage selon l'une des revendications précédentes, **caractérisé en ce que** le circuit de filtrage (6) en tant que circuit de filtrage à plusieurs fréquences est conçu de manière à agir comme circuit d'absorption pour au moins une première fréquence et comme circuit bouchon pour au moins une deuxième fréquence.

11. Montage selon la revendication 10, **caractérisé en ce que** la deuxième fréquence est la fréquence de base.

12. Procédé de compensation d'un courant de fuite en cas de défaut unipolaire à la terre (E), avec un montage selon l'une des revendications 1 à 11, **caractérisé en ce que** les défauts à la terre d'un réseau triphasé sont surveillés, et **en ce qu'**en cas de présence d'un défaut unipolaire à la terre d'un conducteur (L1, L2, L3), un commutateur (7) est actionné manuellement ou automatiquement pour la connexion du conducteur (L1, L2, L3) avec un circuit de filtrage (6) réalisé comme convertisseur de courant et relié à un point neutre à la terre (5.1, 5.3).

13. Procédé de compensation d'un courant de fuite en cas de défaut unipolaire à la terre (E), avec un montage selon l'une des revendications 1 à 11, **caractérisé en ce que** les défauts à la terre d'un réseau triphasé sont surveillés, et **en ce qu'**en cas de défaut unipolaire à la terre d'un conducteur (L1, L2, L3), un courant compensant au moins partiellement au moins une composante de fréquence d'un courant de fuite à la terre est généré au moyen d'au moins un commutateur électronique (7) d'un circuit de filtrage (6) réalisé comme convertisseur de courant (8) entre les conducteurs (L1, L2, L3) et un point neutre à la terre (5.1, 5.3).

14. Procédé de localisation d'un défaut à la terre dans un réseau triphasé (1) avec un montage selon l'une des revendications 1 à 11, **caractérisé en ce qu'**un courant homopolaire d'une fréquence comprise entre 0,1 Hz et 2000 Hz est appliqué par un convertisseur de courant (8) sur le réseau triphasé (1) en service exempt de défaut à la terre, ledit courant homopolaire étant utilisé pour la détermination périodique d'admittances nulles dépendantes de la fréquence qui sont mémorisées comme valeurs de consigne dans un dispositif de saisie, et **en ce qu'**un conducteur (L1, L2, L3) affecté du défaut à la terre (E) et une distance entre un emplacement du défaut à la terre et un emplacement de montage du convertisseur de courant (8) sont déterminés par comparaison des admittances nulles déterminées de même manière dans le cas d'un défaut unipolaire à la terre (E).

15. Procédé de compensation de puissance réactive dans un réseau triphasé (1) avec trois conducteurs (L1, L2, L3) au moyen d'un montage selon l'une des revendications 1 à 11, où la puissance réactive du réseau triphasé (1) est surveillée et où, en cas de puissance réactive, un courant compensant au moins partiellement la puissance réactive est appliqué sur le réseau triphasé (1) au moyen d'un convertisseur de courant (8) relié à un point neutre à la terre (5.1, 5.3), le convertisseur de courant (8) étant relié à au moins un des conducteurs (L1, L2, L3), et commandé et/ou régulé au moyen d'au moins un parmi au moins trois commutateurs (7).
